# EUROPEAN PATENT SPECIFICATION

(11) **EP 2 008 557 B1**
(45) Date of publication and mention of the grant of the patent: **29.08.2012**
(21) Application number: 08159364.2
(22) Date of filing: 30.06.2008
(51) Int. Cl.: A47J 39/00

(54) **Apparatus for the conservation of food products**
Vorrichtung zur Konservierung von Lebensmitteln
Appareil pour la conservation de produits alimentaires

(30) Priority: 29.06.2007 IT MO20070220
(43) Date of publication of application: 31.12.2008
(73) Proprietor: ANGELO PO GRANDI CUCINE S.p.A., 41012 Carpi (MO) (IT)
(72) Inventor: Marenco, Guido, 41125 Modena (IT)
(74) Representative: Crugnola, Pietro

(56) References cited:
- WO-A2-2004/005819
- FR-A1- 2 363 308
- FR-A1- 2 831 248
- US-A- 5 797 445

## Description

The invention relates to a conservation apparatus for foods and/or food products, and, specifically, a conservation apparatus that enables the food products conserved in it to revive in order to make the food products ready for consumption by a user.

Apparatuses are known, such as for example trolley, for transporting and distributing meals to users who are incapable of preparing the meals personally, for example people taken into hospitals or in other healthcare centres.

These apparatuses comprise containers in which the food products to be portioned or, possibly, already portioned in proper containers, are introduced, and heating elements for maintaining the food products at a desired temperature suitable for consumption.

If the completion of a meal provides food items to be consumed cold, for example dessert, fruit, or others, the afore-mentioned apparatuses can comprise an area in which the aforesaid food items are maintained at the conservation temperature required by reference standards.

Usually, the foods are prepared in kitchens provided in hospitals or healthcare centres, and are subsequently introduced in the afore-mentioned apparatuses to be transported to the various users.

However, most people who are not self-sufficient, for example the elderly, or disabled persons who are not hospitalized, and are unable to prepare their own meals, need to have meals delivered to their homes.

In this case, the foods are prepared, for example, by cooperative societies or organizations that handle the afore-mentioned service, and are introduced already portioned in containers, which are assembled in trays to facilitate transport.

The containers are preferably thermal containers to enable the different foods contained therein to be kept at the desired temperature of use of the various foods.

The trays are then transported to the various users. Usually, the foods are prepared and distributed at least once a day to deliver to the users food products that have at least fair organoleptic properties.

In fact, further deferring the preparation of the foods in relation to their consumption would lead to considerable deterioration of the features of the foods.

A drawback of these systems is that they require preparation and delivery of foods to various users at least once a day, this involving considerable costs for the preparation and delivery service.

Moreover, it is very difficult to keep the foods at the desired temperatures, even by using thermal containers, especially when the preparation of the foods is considerably deferred in relation to their delivery and/or consumption.

In this manner the standard which forbids interruption of the hot or cold chain is not respected.

Moreover, the user may have difficulty in opening the thermal containers, which must ensure conservation of the temperature, and must be sealed, for example, with snap airtight locks.

These drawbacks are accentuated by the conditions of the users of this service, usually elderly or disabled persons with motor problems, or lack of memory, or other types of diseases as a result of which they are not self-sufficient. Further, this system does not allow to have optimum foods from the point of view of conservation and therefore the user's health.

US 5 797 445 A discloses an apparatus for the conservation and reviving of food products comprising a food storage area in an insulated single compartment, refrigerator means, tray supports in said food storage area to hold a number of food service trays, refrigerating means for refrigerating said food storage area and heating means for selectively heating food items on said food service trays.

WO 2004/005819A2 discloses a food warming apparatus comprising a plurality of compartments inside which food products may be inserted, heating means for selectively heating foods in said compartments.

FR 2 363 308 A1 discloses an apparatus for conservation and reviving of food products comprising a first compartment for stocking food products and keeping them at a desired conservation temperature and a second compartment for heating said food products. Refrigerating means for refrigerating the first compartment and heating means for heating the second compartment.

An object of the invention is to provide an apparatus which enables foods having high organoleptic features and in excellent state of conservation to be supplied to users.

A further object is to provide an apparatus which allows economical and efficient management of home delivery of meals.

A further object is to provide an apparatus which enables to reduce and/or eliminate the risks for a user connected to the preparation or reviving of meals. The objects of the invention; are obtained in an apparatus according to claim 1.

It is thus possible to heat only food products contained in a desired fraction of heatable containment compartments without altering the conditions of the food products contained in other heatable containment compartments.

In one embodiment, said heating means comprises a centralised heating system.

The plurality of containment compartments may further comprise a plurality of non-heatable containment compartments in which the food products that do not require to be heated are housed.

In a further embodiment, connection means is provided which connect the heating means to heatable containment compartments of said plurality of containment compartments. In a still further embodiment, said fraction of heatable containment compartments comprises a heatable containment compartments.

Driving means can be provided connected to said heating means and arranged for driving said heating means.

The driving means can be connected to selection means arranged for selecting said desired fraction of containment compartments to be heated.

The selection means can be activated by control means for controlling the apparatus through which it is possible to control the operation of the apparatus itself.

The control means may be remote control means pre-set and controlled in remote, or control means activable by the user himself/herself.

In a still further embodiment, the heating means comprises a plurality of heating means positioned at each heatable containment compartments of said plurality of heatable containment compartments.

In a still further embodiment, a plurality of driving means is provided positioned at each heatable containment compartments of said plurality of heatable containment compartments.

In a second aspect of the invention, a method is provided for supplying ready food products comprising conserving a plurality of said food products at a conservation temperature in respective containment compartments, said containment compartments comprising a plurality of heatable containment compartments, heating said food products to make them ready for consumption, characterised in that said heating comprises heating a desired fraction of heatable containment compartments of said plurality of heatable containment compartments.

Owing to these aspects of the invention, it is possible to heat only the food products present in a desired containment compartments, or in a desired fraction of selected containment compartments, without substantially changing the temperature of the food products conserved in containment compartments different from that/those selected, which is/are kept at a conservation temperature.

The latter food products can be heated subsequently following to one or more selections by the user, for example for a subsequent meal.

This allows to preserve the properties of the different food products until their consumption.

In a third aspect of the invention, an apparatus is provided for the conservation and the reviving of food products comprising a plurality of containment compartments inside which said food products are inserted, refrigeration means for maintaining said food products at a desired conservation temperature, heating means for heating said food products, characterised in that of comprising locking/unlocking means for selectively locking/unlocking at least a containment compartments of said plurality of containment compartments.

Owing to this aspect of the invention, it is possible to allow access by a user only to food products present in a desired containment compartments, or in selected containment compartments, keeping the food products conserved in the containment compartments different from that/those selected inaccessible.

This makes it possible to avoid incorrect consumption by the user.

It is possible to allow access to food products present in a desired containment compartments after heating the food product.

The locking/unlocking means can be connected to driving means arranged for driving said locking/unlocking means following a driving signal sent, for example, by control means of the apparatus.

Furthermore, owing to the invention, it is no longer necessary to deliver meals to homes at least once a day, but the frequency of delivery can be reduced, for example, to once in four days.

This enables the management costs of the service for preparation and home delivery of meals to users to be considerably reduced.

In fact, it is possible to simultaneously prepare all the foods for the meals for a desired number of days for the user or a group of users served by the meals home delivery service, portion these foods in proper containers, assemble the various containers containing the foods which constitute a meal for a user in individual trays and transport the trays to the various users.

The person who transports and delivers the meals therefore delivers to each user or to each group of users the trays containing the meals for that user or for that group, for the desired number of days, and arranges these trays in the suitable compartments of the conservation apparatus.

In this manner, apart from saving considerably on the management cost of the service, the problems for the user are limited as he/she needs to be available only once/twice a week.

Moreover, as the foods are heated at the time of consumption, it is possible to considerably improve the organoleptic and nutritive features of the foods.

This also allows to improve the conservation of the foods which are maintained at a conservation temperature up to the moment of consumption, and revived only immediately before consumption.

The invention further allows to release the moment of preparation of meals from the moment of consumption of the meals.

The heating means and their conformation further allows to reduce the risks connected to incorrect heating of meals by a user and, thus the risks for the health and/or even the safety of the user.

Furthermore, even the locking/unlocking means allows to reduce the risks connected to incorrect heating of meals by a user and, thus the risks for the health and/or even the safety of the user.

Furthermore, the preset control means enables to prevent the user from ignoring the envisaged diet regime and from consuming the wrong meals and/or at wrong times of the day.

The apparatus can, further, be provided with a refrigerator compartment, possibly separated from the containment compartments and arranged for also conserving beverages, medicines, etc. thus replacing the common refrigerator apparatuses with the apparatus according to the invention.

The apparatus can be further provided with a section for collecting the waste, suitably positioned in the apparatus so as to avoid contamination of the foods conserved.

The section for the collection of waste can be provided with an airtight lock to prevent bad odour from spreading in the environment between two successive operations of emptying of the section for the collection of the waste.

The presence and/or the features of the section for the collection of waste enables the waste to be correctly conserved, preventing the propagation of bad odours and/or the proliferation of micro-organisms.

The waste can then be taken by an operator responsible for delivering the meals and sent to suitable centres for collection and disposal.

The apparatus according to the invention can be favourably used also outside the strictly domestic context of care of the elderly, inasmuch as the apparatus, suitably sized, can be used also in working environments in which it is necessary to ensure constant supervision around the clock, or where the number of persons employed does not justify an internal canteen, or where the services are lacking.

In an alternative embodiment of the application of the invention for the community, it is possible to set simultaneous and/or sequential regeneration of foods present in a desired fraction of the heatable containment compartments of the apparatus arranged for the regeneration, maintaining the food products present in the containment compartments not selected at the conservation temperature and thus preserving the quality and the organoleptic features of these food products which are heated only and directly before consumption by the users.

The main advantage consists in being able to offer a good quality service in situations where there are no valid alternatives for economic and/or logistic considerations.

The invention will be better understood and carried into effect with reference to the attached drawings, in which some embodiments are shown by way of non-limiting examples, in which:
Figure 1 is a partially sectioned perspective view of an apparatus according to the invention;
Figure 2 is a partially sectioned perspective view of an apparatus according to the invention showing a further conformation of opening doors of the apparatus;
Figure 3 is a schematic, sectioned, partially interrupted front view of the apparatus in Figure 2;
Figure 4 is a detail of Figure 3;
Figure 5 is a side section of the apparatus in Figure 2;
Figure 6 is a schematic top view of an embodiment of a food-holder tray;
Figure 7 is a schematic section view of a containment compartments of the apparatus in Figure 1;
Figure 8 is an enlarged view of a detail of Figure 7 in a first operating configuration;
Figure 9 is an enlarged view of the detail in Figure 8 in a second operating configuration;
Figure 10 is a block diagram showing a possible sequence of actions of a meals distribution service.

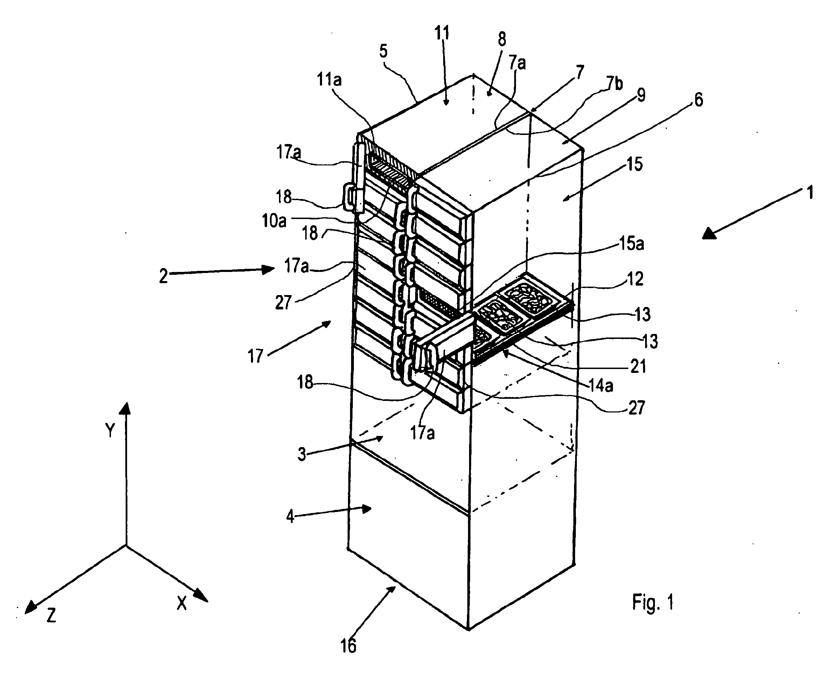

With reference to Figures 1-5 an apparatus 1 is shown for the conservation and reviving of foods, preferably having a parallelepipedon shape.

The apparatus 1 comprises a conservation and reviving compartment 2 inside which foods to be conserved are introduced, a refrigerator compartment 3, and a further compartment 4 for waste collection.

The compartment 2 comprises a first lateral surface 5 and a second lateral surface 6 and an internal baffle 7 which extends along the longitudinal dimension L of compartment 2 so as to define inside the compartment 2 a first containment chamber 8 and a second containment chamber 9.

A plurality of divider elements 10 is provided inside the first containment chamber 8, arranged for defining a plurality of containment compartments 11 inside the first containment chamber 8.

Each divider element 10a of the plurality of divider elements 10 extends between the first lateral surface 5 and a first wall 7a of the internal baffle 7.

Tray-holder guides 22 are arranged inside each containment compartment 11a of the plurality of containment compartments 11, along the first lateral surface 5 and the first wall 7a, for receiving a tray 12 resting thereon and to allow sliding of the tray 12.

A tray 12, provided with containers 13 containing foods, is inserted in a desired containment compartment 11a along said guides 22, and made to slide along said guides 22 until complete insertion inside the respective containment compartment 11a.

Containers 13 containing the foods forming a single meal for a user or part of a single meal for a user are positioned on each tray 12, at the respective cavities obtained in tray 12.

In fact, the foods forming a single meal can all be arranged on the same tray 12 or on two separate trays 12 to be positioned respectively in a containment compartment 11a and in a further containment compartment 15a, separating the foods to be regenerated from the foods to be consumed at conservation temperature.

Usually, three containers 13 are positioned on each tray 12. The dimensions of each container 13 are such that the containers 13 present in the same tray 12 couple with each other.

Moreover, the dimensions of each container 13 are such as to adapt to the corresponding cavities provided in tray 12.

The second containment chamber 9 is configured like the first containment chamber 8 and is provided with a further plurality of divider elements 14, each further divider element 14a extending between the second lateral surface 6 and a second wall 7b of internal baffle 7, the divider elements 14 being arranged for defining a further plurality of containment compartments 15.

Further tray-holder guides 21 are present inside each further containment compartment 15a of the further plurality of containment compartments 15, along the second lateral surface 6 and the second wall 7b.

Each tray 12, provided with containers 13 containing the foods, is inserted in a desired containment compartment 15a along said further guides 21.

In the embodiment of Figure 1, the trays 12 are rested and made to slide on special sliding surfaces provided in each containment compartment 11a or further containment compartment 15a, for example on sliding surfaces respectively of each divider element 10a and/or of each further divider element 14a.

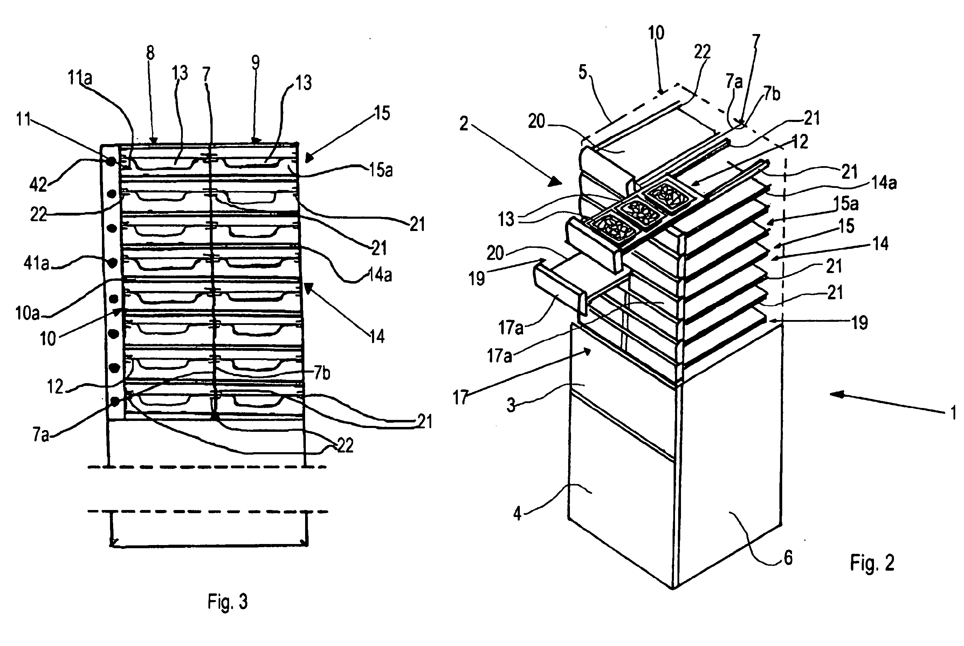

In the embodiment of Figure 3, the guides 22 and the further guides 21 respectively comprise two guide portions shaped so that a portion of the edge of tray 12 is inserted between the two guide portions and can slide between the two guide portions, so as to be suspended inside each containment compartment 11a or further containment compartment 15a.

On a front surface 16 of compartment 2 a plurality of doors 17 is provided, each door 17a of the plurality of doors 17 being positioned at each containment compartment 11a, or at each further containment compartment 15a, and being openable to allow to access respectively to a containment compartment 11a, or to a further containment compartment 15a picking up the respective tray 12.

In the embodiment of Figure 1, each door 17a is hinged to the first lateral surface 5 or , respectively, to the second lateral surface 6 of compartment 2 by a respective hinge 27, and can be opened by a user who acting on a handle 18 of the door 17a rotates the door 17a around its hinge 27.

In the embodiment of Figure 1, the hinges 27 of doors 17a are shaped so as to allow a horizontal rotation around a longitudinal axis Y.

In an alternative embodiment, not shown, the hinges 27 may be shaped so as to allow a vertical rotation of door 17a around a transverse axis X.

When door 17a is opened, the user can take out tray 12 contained in the corresponding containment compartment 11a, or further containment compartment 15a.

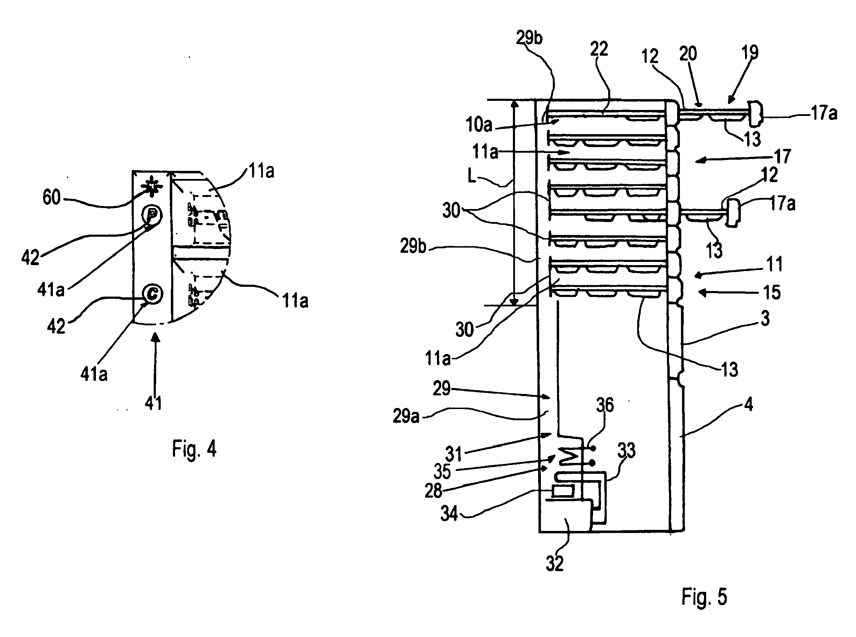

In the embodiment of the apparatus shown in Figure 5, each door 17a is fixed to a tray-holder frame 19 so as to form with a divider element 10a, or with a further divider element 14a, a containment drawer 20 inside which a tray 12 is placed.

In this case, to access a containment compartment 11a, and/or a further containment compartment 15a, a user grasps a gripping part of a door 17a pulling it towards himself/herself.

The user thus causes the sliding of the tray-holder frame 19 fixed to the door 17a outwards along the sliding guides 22, or respectively along the further guides 21 provided inside the compartment 2 respectively at the first lateral surface 5 and the first wall 7a, for each containment compartment 11a, and at the second lateral surface 6 and second wall 7b for each further containment compartment 15a, so that frame 19 projects out of compartment 2 and the tray 12 resting on it and, therefore, the containers 13 and the foods contained in it are accessible to a user.

Each door 17a can be connected to locking/unlocking means arranged for locking/unlocking one or more of the doors 17a making the foods enclosed in the corresponding containment compartment 11a and/or further containment compartment 15a, respectively inaccessible and accessible to the user.

The locking/unlocking means can be connected to control means which controls the driving of the locking/unlocking means.

Each containment compartment 11a, can be provided with a gate valve means 30, connected to electrical driving means, not shown, and movable between a cooling position in which containment compartment 11a is connected to a respective cooling conduit 31 for cooling or maintaining the respective food products at conservation temperature, and a heating position in which containment compartment 11a is connected to respective peripheral heating conduit 29b of a heating system 28 for heating the respective food products.

The heating system 28 comprises heating conduits 29 comprising a central conduit 29a connected to the heating system 28 and a plurality of peripheral conduits 29b which extend from the central conduit 29a towards each heatable containment compartment 11a of the plurality of heatable containment compartments 11.

The gate valve means 30 can be positioned at each peripheral conduit 29b of said plurality of peripheral conduits 29b for opening/closing said peripheral conduit means 29b to allow/prevent the heating of the corresponding heatable containment compartment 11a.

By driving the gate valve means 30, it is therefore possible to alternatively and selectively connect each containment compartment 11a to a cooling conduit 31 through which a cooling fluid flows, for cooling, or maintaining the foods present in each containment compartment 11a at a desired conservation temperature, or to a peripheral heating conduit 29b in which a heating fluid flows for regenerating these foods.

The cooling conduit 31 receives a cooling fluid produced by evaporator pipes 33 of a refrigeration system 32, and which is pushed towards the cooling conduit 31 by fan means 34 positioned upstream of evaporator pipes 33.

The heating conduit 29 receives a heating fluid, for example hot air, from further fan means 35 positioned upstream of electrical heating elements 36.

In one embodiment, it is possible to simultaneously drive the gate valve means 30 of a desired fraction of containment compartment 11a so as to simultaneously position such gate valve means 30 in the heating position of the containment compartment 11a.

The gate valve means 30 of a further fraction of containment compartment 11a can be positioned in the cooling position so as to cool the corresponding meals or to maintain the meals at a conservation temperature.

By appropriately driving the gate valve means of a desired fraction of containment compartment 11a, it is possible to prevent subjecting all the meals present in the apparatus, particularly, all the meals present in the containment compartments 11, to the same heat treatments, saving on consumption of the apparatus, but, most of all, obtaining meals having high organoleptic properties according to the customer/s requirements.

In a further embodiment, gate valve means can be provided, positioned so as to simultaneously influence a fraction of containment compartment 11a.

That is, by driving a single gate valve element of the gate valve means, it is possible to simultaneously heat and/or cool a corresponding fraction of the containment compartment 11a.

By fraction of containment compartments is intended a part of the containment compartments 11, and/or of the further containment compartments 15, i.e. a number of containment compartments 11, and/or of the further containment compartments 15, less than the total number of the containment compartments 11, and/or of the further containment compartments 15.

The driving means of the gate valve means can be connected to apparatus control means which activate the driving means to move the gate valve means, as better explained below.

In an alternative embodiment, each containment compartment 11a may be provided with a respective electrical heating element and a respective fan for heating each containment compartment 11a by convection.

In this embodiment, driving means may be provided, connected to each electrical heating element for driving the heating of each electrical heating element, or of the electrical heating elements of a desired fraction of containment compartment 11a so as to heat the corresponding meals.

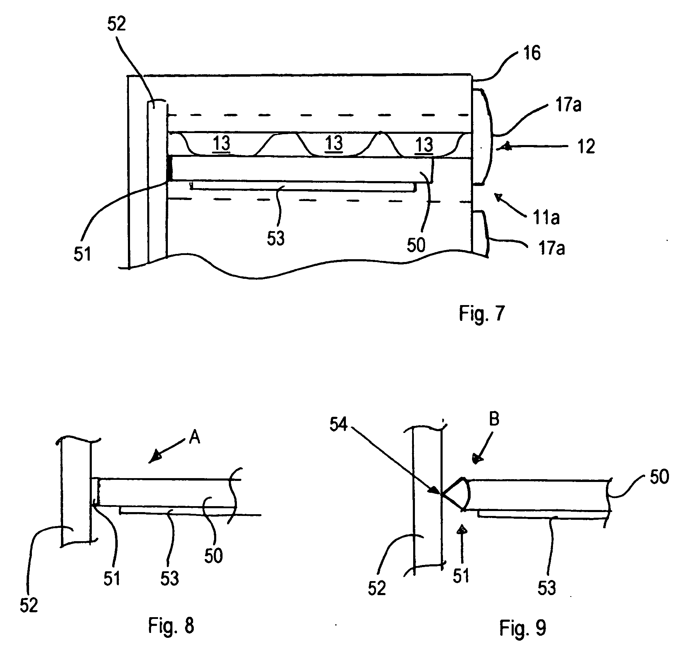

In a further alternative embodiment shown in Figures 7-9, the heating and/or cooling of food products present in trays 12 is done by thermal contact.

In this embodiment, a plate 50 is provided, made of a highly conductive metal, for example, aluminium, at each containment 11a, and/or in each further containment compartment 15a.

The containers 13 are rested on the plate 50 so as to come directly in contact with the plate 50 which, by contact keeps containers 13 at low temperature, releasing the cold to containers 13 and thus to the foods present in the containers 13.

The plate 50 is connected by means of a bi-metallic spacer 51 which is deformed with change in the temperature, to an evaporator 52 arranged for cooling plate 50.

Plate 50 is then provided with at least a heating element 53 connected to plate 50 by welding which is activated at the time of regeneration, or heating, as described below.

When a containment compartment 11a is in the conservation or cooling step, spacer 51 is in connecting position A, shown in Figure 8, and is configured so as to allow thermal connection by contact with the interposition of the spacer 51 between the plate 50 and the evaporator 52, so that the cold is transmitted by evaporator 52 to plate 50.

When the heating element 53 is activated, the temperature increase generates deformation of spacer 51 which is deformed causing detachment of the plate 50 from the evaporator 52.

In isolation position B, shown in Figure 9, the spacer 51 does not connect the plate 50 to the evaporator 52.

In isolation position B, the evaporator 52 remains connected to the plate 50 only at a very narrow area 54, that is a point connection, which prevents transmission of cold by contact to the plate 50, while allowing regeneration of the foods in containers 13 by the heating of heating elements 53.

When heating element 53 is deactivated, spacer 51 returns to connecting position A of Figure 8, again allowing the plate 50 to cool by contact with the evaporator 52.

Also in this embodiment, is provided driving means arranged for driving the heating of heating element 53 of each containment compartment 11a, or of a desired fraction of containment compartments 11, so as to heat the respective meals.

In the embodiments shown, the apparatus 1 comprises eight containment compartments 11a and eight further containment compartments 15a, i.e., a total of sixteen containment chambers which house 8 complete meals.

In this case, a user has high autonomy, i.e. for at least four days.

Or, alternatively, a fair number of users can take advantage of the service.

This enables the system for the preparation and home delivery of meals to be organized so that the meals are delivered once every four days.

This allows to considerably reduce the service management costs.

In alternative embodiments of the apparatus, a different number of containment chambers may be provided, depending on the needs of the user and/or the number of users who take advantage of the meals conserved in the same apparatus, and/or the organization of the preparation and home delivery service, i.e. the frequency with which the meals are delivered to the homes of the users.

In the containment compartment 11a of the first containment chamber 8, i.e. in the heatable containment compartments of the apparatus are housed meals which are conserved at a certain conservation temperature required by reference standards, but which, before being used, must be heated or regenerated, so that the optimum predefined temperature is reached at the core of each food item for consumption immediately following regeneration, as best explained below, while the further containment compartments 15a of the second containment chamber 9, i.e. in the unheatable containment compartments of apparatus 1, are housed meals which are conserved at a predefined conservation temperature and do not need to be heated before consumption.

The containment compartments 11a of the first containment chamber 8 are heatable, i.e. they can be suitably connected to the heating system 28 for being heated, can contain food products which can and/or must be heated before being consumed, and/or the trays 12 inserted in them can be subjected to heating without being damaged.

On the other hand, the further containment compartments 15a of the second containment chamber 9 are configured so that they cannot be heated, i.e. they contain food products which need not be heated before consumption, and would be damaged if heated, for example, dessert, or fresh vegetables or fruit, and/or the trays 12 inserted in them cannot be subjected to heating because they would be damaged.

Moreover, the heating system 28 of apparatus 1 is configured so as to comprise peripheral heating conduits 29b extending from heating system 28 towards the heatable heating compartments 11a, but not involving the further containment compartments 15a of the second containment chamber 9.

Eventually, the trays 12 respectively placed in a containment compartment 11a and in a further containment compartment 15a, which are placed alongside one another, i.e. arranged on the same line, can contain foods constituting a single meal and which are positioned in different trays 12 to separate the foods that need regeneration before consumption from those that do not need it.

In an alternative embodiment, the first containment chamber 8 as well as the second containment chamber 9 can house respectively in the containment compartments 11a and in the further containment compartments 15a, food products conserved at a certain conservation temperature, and which must be heated before consumption.

In this case, both the containment compartments 11a and the further containment compartments 15a, and/or trays 12 contained therein are heatable, i.e. can be subjected to heating without being damaged, and can therefore be suitably connected to the heating system 28.

Also in this case, the heating means are configured so as to selectively heat a desired fraction of said containment compartments and/or of said further containment compartments, leaving the conditions of the food products contained in the containment compartments and/or in the further containment compartments not selected substantially unchanged.

The apparatus 1 is further provided with a plurality of displaying means 41, shown better in Figure 4, positioned on suitable areas of the front surface 16 of compartment 2, for example, each displaying means 41a is arranged at each containment compartment 11a, and/or each further containment compartment 15a.

The displaying means 41 allows to display the type of meal present in the corresponding compartment- further compartment 11a, 15a, lunch, dinner, and serve as a guide for an operator who must insert the trays in the respective containment compartments - further compartments 11, 15, as well as for a user.

The displaying means 41 can further display the time when the meal contained in the corresponding containment compartment is to be used.

Each displaying means 41a, further, can be shaped like a pushbutton 42 to be pressed to activate certain commands.

Each pushbutton 42 can further be connected to the driving means of the doors 17 for activating the locking/unlocking of doors 17 to allow the opening of the doors 17, and, thus the access to the meal conserved in the corresponding containment compartment 11a, 15a only at a certain time interval corresponding to the expected time of consumption of the meal.

If the pushbutton 42 is at a compartment in which is conserved a meal to be conserved without previous heating, by pressing the pushbutton 42 the locking means is activated to control the opening of the corresponding door 17a to be able to access the corresponding meal.

Possibly, the opening of door 17a depends on a further preset locking command, to allow access to this door only in an expected time interval.

These values can be set by the operator who delivers the meals and positions the meals in compartment 2, and/or can be automatically updated by software.

This allows to prevent the user from eating the wrong meals and thus ignoring the envisaged diet regime and/or having an irregular or unregulated diet with serious harm to health of the user, whether short term, for example indigestion, or long term.

Moreover, each pushbutton 42, which is at a compartment in which a meal that is to be conserved at a certain temperature and regenerated by heating before consumption is conserved, can further be connected to driving means of heating means.

In this manner, by pressing the pushbutton 42, the user can activate the driving means which moves the gate valve means 30 of the corresponding containment compartment 11a, so as to allow heating of the corresponding meal.

If necessary, apparatus 1 can be provided with a central control system, possibly operated from a pushbutton panel, by acting on which the user can select a desired fraction of heatable containment compartments, activate, by means of relative driving means, the heating of the meals contained in this fraction of containment compartments, and eventually unlock the corresponding doors to access the meals at the end of the heating step.

In another embodiment, control of the apparatus may be completely automatic, preset and carried out by remote control, by remote control means connected to the activation means provided in the apparatus.

The remote control means act, by the activation means, on the selection means to select a desired fraction of containment compartments, activate, by relative activation means, the heating of the meals contained in this fraction of containment compartments, and eventually unlock the corresponding doors to allow the user to access the meals in the selected compartments at the end of the heating step.

The apparatus 1 may further comprise a loudspeaker 60, shown in Figure 4, arranged for guiding the user in the operation of apparatus 1, and/or for warning the user who is trying to perform operations that are not permitted, for example, taking out a meal different from the meal that the user should take out.

In a preferred embodiment, the dimensions of the containment compartments 11a, and of the further containment compartments 15a, or at least their transverse dimensions, may be different, so that a tray 12 arranged for being inserted in a containment compartment 11a cannot be mistakenly inserted in a further containment compartment 15a, and vice versa.

Similarly, trays 12 arranged for being inserted in a containment compartment 11a are sized so that they cannot be mistakenly inserted in a further containment compartment 15a and vice versa, to prevent placing errors.

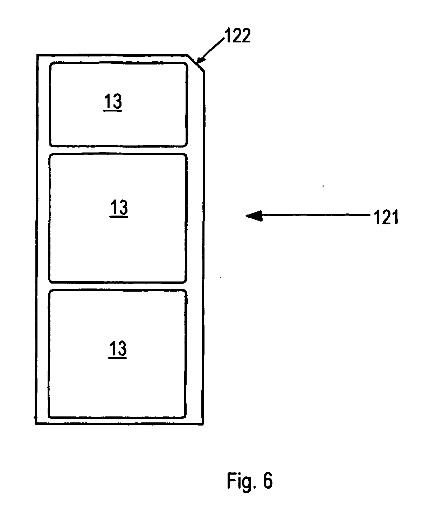

In an alternative embodiment shown in Figure 6, there are provided trays 121 with an anti-error device 122.

The trays 121 are provided with coupling means 122 shaped so as to couple with further coupling means provided in said containment compartments.

If heatable containment compartments 11a and non-heatable further containment compartments 15a are provided, first trays are provided having first coupling means arranged for coupling with further first coupling means provided in the heatable containment compartments 11a, and second trays provided with second coupling means arranged for coupling with further second coupling means provided in the non-heatable containment compartments 15a.

The first and second coupling means and the further first and second coupling means being separated from one another, so that the trays intended for being inserted in the heatable containment compartments 11a cannot be correctly inserted in the non-heatable containment compartments 15a, and vice versa.

The incorrect insertion of trays in containment compartments 11a, 15a of the apparatus 1 is thus avoided.

Each different type of tray can be distinguished by the colour, for example the trays arranged for being inserted in a containment compartment 11a are red and the trays arranged for being inserted in a further containment compartment 15a are blue.

In an alternative version, the containment compartments - further containment compartments 11a-15a can be equipped with a mechanism to ensure automatic lock of the compartment after a certain predefined adjustable time interval to prevent abnormal operations of the apparatus.

The user must be able to access only the compartment which has to be opened for consuming the meal.

In special cases, the possibility is provided for closing the refrigerator compartment 3 intended for medicines and/or water.

The apparatus may further comprise a signalling device to signal the opening of a containment compartment or of a further containment compartment 11a, 15a, to an electronic controller board controlled by software which, by means of telephone and/or e-mail, can send communication regarding failed opening to the selected recipients (relatives, organizations which handle the supplying, etc.); a transmission device, for example, made of quartz or similar, which sends an electric signal proportional to the weight, to the electronic controller board checking to make sure the trays or the individual containers are taken and sending communication of eventual failed openings to the selected recipients (relatives, organizations which handle the supplying, etc.).

In the refrigerator compartment 3, can be conserved for example, beverages, medicines or other products which must be conserved at a low temperature, as required by reference standards.

In the further compartment 4 are placed and collected food waste and waste which are conserved at low temperature, before being taken out, for example, by the operator distributing the meals, therefore with a minimal frequency of once in four days, or by another operator, and be taken to areas for collection and disposal.

The further compartment 4 is closed airtight, this enabling, together with the low temperature provided in the further compartment 4, to prevent spreading of bad odour and/or the proliferation of harmful microrganisms in the environment.

Furthermore, a sanitization device is also provided, not shown, for sanitizing the compartment 2, specifically each containment compartment 11a, and/or each further containment compartment 15a, and/or the refrigeration compartment 3 and/or the further compartment 4, to prevent the proliferation of bacteria or other microrganisms.

The sanitization device can sanitize by emission of UV rays, or by using substances which act chemically, for example sanitizing sprays, or tablets, which prevent proliferation of bacteria.

The system of preparation and home delivery of meals which uses the apparatus described above can provide for example the preparation of meals in the kitchen of the organization or of the cooperative, or of the institution that handles the service, according to the dietary indications provided.

After being cooked, the meals can be placed in the containers and placed in a rapid temperature reduction system, so as to bring the temperature at the core of the cooked product to a value required by the reference standards, in a very short time.

This temperature value is an optimum value for the conservation of foods, which can, therefore, be conserved for at least three days from the date of preparation.

If necessary, the meals can be introduced in the containers and then be sealed in a protective atmosphere, usually in an inert gas atmosphere, for example carbon dioxide and nitrogen, which, by not reacting with the substances of the food product, allow to further prolong the conservation time of the food product up to even 20-30 days from the date of preparation.

Identification labels of the food products can be applied on the sealed containers to facilitate identification of the food product contained therein.

Subsequently, the various containers are then grouped in suitable trays so that each single tray contains only the containers that the user has to consume on the same meal, the trays are then loaded on a transport vehicle to be transported to the various users of the service.

The operator in charge of home delivery of the meals delivers to the user of the service a certain number of meals having the dietary features envisaged by the diet regime fixed for the user, and/or the meals selected by the user, grouped in respective trays, this number of meals depending on the number of containment compartments and of the further containment compartments provided in apparatus 1.

The operator will also arrange the individual trays in the respective containment compartments, by respecting the alternation meal/dinner, among the various days of the week envisaged, and paying attention to the features of the products present in the individual trays, i.e. products to be consumed after heating or those that do not require heating.

The operator, if necessary, will program the locking/unlocking of the doors 17 of the individual containment compartments 11a, 15a, of the apparatus 1 to allow the opening of the various doors only in an expected time interval.

The meals present in the individual containment compartments 11a, 15a are therefore maintained at a conservation temperature required by the reference standards.

If the refrigeration compartment 3 and/or the further compartment 4 is present, each of the solutions described above for the production of cold is conformed so as to reach also the refrigeration compartment 3 and/or the further compartment 4, in order to maintain in these compartments a temperature required or appropriate for their contents.

If a user desires to eat one of the meals present in apparatus 1, if this desire occurs within the expected times, he/she will activate the apparatus control means to communicate the desire that the meal will be prepared for consumption.

This command is processed by a central control system of apparatus 1, if the selection involves consumption of a meal without products to be heated, i.e. those conserved in one of the further containment compartments 15a, the central control system causes opening of the corresponding door 17.

On the other hand, if the selection made by the user involves the consumption of a meal with products to be heated, i.e. those conserved in one of the containment compartments 11a, the central control system activates the gate valve corresponding to the containment compartment 11a which contains the selected meal.

The containment compartment 11a is thus connected by its peripheral conduit 29b to heating conduit 29 receiving the heating fluid moved by the further fan means 35.

In an alternative embodiment, not shown, the heating is done by convection by a fan and a heating element positioned in each of the containment compartments 11a.

In an alternative embodiment, both the system for maintaining at low temperature and for regeneration occurs by thermal contact.

Using any one of the methods described above, the meal present in a certain containment compartment 11a or in a fraction of the containment compartments selected by the user is heated.

At the end of the heating process, the central control system causes the opening of the corresponding door 17a, so that the user can pick up the tray present in the containment compartment 11a and have the desired meal.

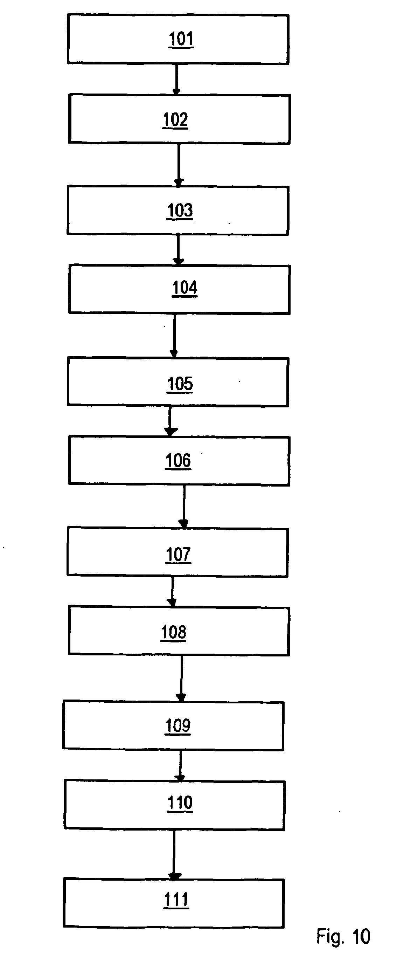

With reference to Figure 10, a block diagram is shown, which shows a possible sequence of actions of a preparation and distribution service of meals to a user.

The service provides a first sequence of actions 101-108 to be carried out in a central kitchen, for example, the kitchen of an organization which receives the contract for the service, and a second sequence of actions 110-111, to be carried out in the home of the user, and a transport step 109 which involves transfer from the organization to the home of the user.

The first sequence of actions comprises the receiving 101, by the organization of the food products to be used for the preparation of the various meals, the storage 102 of these food products before preparation of the meals, the picking up 103 of the food products for preparation of the meals, the incorporation 104 of the various food products constituting the ingredients of the various meals so as to be able to prepare the meals, the cooking 105 and/or general preparation of the various meals.

The meals prepared are then subjected to a cooling step 106 in which there is sudden cooling of the temperature of the meals, in compliance with the reference standards.

The meals are then subjected to packing 107 in single-portions, these single-portions can be formed directly in containers 13 and these can be directly grouped in a tray 12 so that a tray 12 contains the containers 13 containing the foods that form a single meal.

The packing 107 can be done in a protective atmosphere, for example, in an atmosphere of inert gases, like carbon dioxide and nitrogen, so as to further improve the conservation conditions of meals and prolong conservation times of meals up to 21-28 days.

The various meals, suitably portioned and packed, are then subjected to refrigerated storage 108 before being picked up by an operator to be transported to the home of the user.

Subsequently, the operator will pick up the various trays 12 eventually suitably grouping the various trays 12 depending on the users for whom they are intended and/or the type of meal contained in them, for example lunch or dinner, and place the various trays 12 in the transport means for transporting them to the individual users.

During transport 109, the foods present in trays 12 are maintained at temperatures predefined by the reference standards, so as to avoid interrupting the cold chain and preserve the organoleptic and sanitary qualities of the products.

Subsequently, once reached a certain user, the operator unloads trays 12 intended for him/her and places them in apparatus 1 provided to the user, and picks up the waste present in compartment 4 for collecting the waste.

The meals are then subjected to further refrigerated storage 110 in apparatus 1 before being consumed, and, if necessary, they are subjected to heating 111, before consumption.

## Claims

1. Apparatus for the conservation and reviving of food products comprising:
a plurality of containment compartments (11, 15) inside which said food products are inserted,
- refrigeration means (31, 32, 33, 34; 50, 51, 52) suitable for refrigerating said containment compartments (11, 15) for maintaining said food products at a desired conservation temperature,
- heating means (28, 29, 29a, 29b, 35, 36; 53) suitable for heating said containment compartments (11, 15) for heating said food products, said heating means (28, 29, 29a, 29b, 35, 36; 53) and said refrigeration means being connected to said containment compartments (11, 15) so as to heat or cool a desired fraction of containment compartments (11, 15) independently of the remaining containment compartments (11, 15),
**characterised in that** it further comprises:
- locking/unlocking means for selectively locking/unlocking at least a containment compartment (11a, 15a) of said plurality of containment compartments (11, 15),
- displaying means (41, 41a) arranged for indicating the type of food products contained in each containment compartment (11a, 15a) of said plurality of containment compartments (11, 15) and
- signalling means arranged for signalling the opening of each containment compartments (11a, 15a).

2. Apparatus according to claim 1, wherein said fraction of heatable containment compartments comprises a single containment compartment (11a).

3. Apparatus according to claim 1 or 2, and further comprising a plurality of closure means (17) arranged for closing said plurality of containment compartments (11, 15).

4. Apparatus according to claim 3, wherein said each one of said closure means (17) comprises a door (17a) associated with a respective containment compartment (11, 15) and hinged to a front surface (16) of said apparatus (1) by hinge means (27) that is rotatable around a longitudinal hinging axis (Y).

5. Apparatus according to claim 3, wherein said each one of said closure means (17) comprises a door (17a) associated with a respective containment compartment (11, 15) and hinged to a front surface (16) of said apparatus (1) by hinge means (27) that is rotatable around a transverse hinging axis (X).

6. Apparatus according to claim 3, wherein each of said closure means (17) comprises a door (17a) associated with a respective containment compartments (11, 15) and movable in relation to a front surface (16) of said apparatus (1).

7. Apparatus according to any one of claims 3 to 6, and further comprising automatic closure means of said plurality of closure means (17) and arranged for automatically closing each door (17a) of said plurality of closure means (17).

8. Apparatus according to any one of claims 1 to 7, wherein said heating means comprises a centralized heating system (28, 29, 29a, 29b, 35, 36).

9. Apparatus according to any one of claims 1 to 7, wherein said heating means comprises a convection heating system (28, 29, 29a, 29b, 35, 36).

10. Apparatus according to any one of claims 1 to 7, wherein said heating means comprises a contact heating system (53).

11. Apparatus according to claim 8, or 9, wherein said centralized heating system or said convection heating. system comprises an electrical heating element (36) arranged for generating heat, fan means (35) arranged for pushing said heat towards conduit means (29, 29a, 29b) which conveys said heat towards said plurality of heatable containment compartments (11).

12. Apparatus according to any one of claims 1 to 11, wherein said heating means comprises a plurality of heating devices (53) positioned at said plurality of heatable containment compartments (11).

13. Apparatus according to claim 12, wherein at least one heating device (53) of said plurality of heating devices (53) is positioned at each heatable containment compartment (11a) of said plurality of heatable containment compartments (11).

14. Apparatus according to any preceding claim, further comprising connection means (30) arranged for connecting said desired fraction of heatable containment compartments to said heating means (28, 29, 29a, 29b, 35, 36; 53) for heating said desired fraction of heatable containment compartments, said connection means comprising gate valve means (30) movable between a heating position in which said heating means (28, 29, 29a, 29b, 35, 36; 53) is connected to said desired fraction of containment compartments and a cooling position in which said heating means (28, 29, 29a, 29b, 35, 36; 53) is not connected to said desired fraction of containment compartments.

15. Apparatus according to claim 14, wherein in said cooling position said refrigeration means (31, 32, 33, 34; 50, 51, 52) is connected to said fraction of containment compartments.

16. Apparatus according to any preceding claim, and further comprising driving means connected to said heating means (28, 29, 29a, 29b, 35, 36; 53) and arranged for driving said heating means (28, 29, 29a, 29b, 35, 36; 53) for heating said desired fraction of heatable containment compartments.

17. Apparatus according to any one of claims 14 to 16, and further comprising activation means connected to said connection means (30) and arranged for moving said connection means (30).

18. Apparatus according to claim 17, wherein said activation means comprises electrical activation means.

19. Apparatus according to any preceding claim, and further comprising selection means for selecting said fraction of heatable containment compartments to be heated.

20. Apparatus according to claim 19, wherein said selection means are connected to said driving means for selectively driving said driving means.

21. Apparatus according to any preceding claim, and further comprising control means of said apparatus arranged for controlling the operation of said apparatus.

22. Apparatus according to claim 21, wherein said control means are connected to said selection means for activating the selection control.

23. Apparatus according to claim 21 or 22, wherein said control means comprises preset remote control means arranged for remote controlling of the operation of said apparatus.

24. Apparatus according to claim 21, or 22, wherein said control means comprises local control means (42) positioned on said apparatus (1) and arranged for controlling the operation of said apparatus.

25. Apparatus according to claim 24, wherein said local control means comprises pushbutton means (42) that can be operated by a user for controlling the operation of said apparatus.

26. Apparatus according to claim 25, wherein said pushbutton means (42) comprises a pushbutton panel for controlling the operation of said apparatus.

27. Apparatus according to claim 25, wherein said pushbutton means comprises a plurality of pushbuttons (42) positioned at each containment compartment (11a, 15a) of said plurality of containment compartments (11, 15).

28. Apparatus according to any preceding claim, wherein said displaying means (41, 41a) comprises a plurality of displaying means (41a) arranged at each containment compartment (11a, 15a) of said plurality of containment compartments (11, 15).

29. Apparatus according to any preceding claim, wherein said refrigeration means comprises a centralised refrigeration system (31, 32, 33, 34).

30. Apparatus according to claim 29, wherein said centralised refrigeration system comprises a refrigeration system (32) arranged for cooling a cooling fluid.

31. Apparatus according to claim 30, and further comprising cooling conduits (31) which extend from said refrigeration system (32) towards each containment compartment (11a, 15a) of said plurality of containment compartments (11, 15) and arranged for conveying a cooling fluid towards each containment compartment (11a, 15a.)

32. Apparatus according to claim 31, wherein said cooling conduits (31) further comprise first refrigeration conduit means extending between said refrigeration system and heatable compartments (11a) of said plurality of containment compartments (11, 15) and second refrigeration conduit means extending between said refrigeration system and non-heatable compartments (15a) of said plurality of containment compartments (11, 15).

33. Apparatus according to claim 32, and further comprising switch means, positioned at said cooling conduits (31) and arranged for opening/closing said cooling conduits (31) for allowing/preventing cooling of corresponding containment compartments (11a, 15a).

34. Apparatus according to any preceding claim, wherein said refrigeration means comprises a plurality of local refrigeration means (50, 51, 52) positioned at each containment compartment (11a, 15a) of said plurality of heating compartments (11, 15).

35. Apparatus according to claim 34, wherein said local refrigeration means (50, 51, 52) comprises a plurality of plates (50) positioned at each containment compartments (11a, 15a) of said plurality of heating compartments (11, 15).

36. Apparatus according to claim 35, wherein said plurality of plates comprises plates (50) made of conductor material, preferably a metal, such as, for example, aluminium.

37. Apparatus according to claim 35 or 36, wherein said refrigeration means comprises at least an evaporator (52).

38. Apparatus according to claim 37, wherein an evaporator (52) is present at each plate (50).

39. Apparatus according to any preceding claim, and further comprising refrigeration compartment means (3) separated from said plurality of containment compartments (11, 15), provided with further refrigeration means and arranged for conservating further food products.

40. Apparatus according to any preceding claim, and further comprising further compartment means (4) separated from said plurality of containment compartments (11, 15), provided with still further refrigeration means and arranged for conservation of food waste.

41. Apparatus according to any preceding claim, and further comprising loudspeaker means (60) arranged for guiding a user in the use of said apparatus.

42. Apparatus according to any preceding claim, and further comprising movable drawer means shaped so as to be inserted in each containment compartment (11a, 15a) and arranged for receiving said food products.

43. Apparatus according to any preceding claim, wherein each containment compartment (11a, 15a) comprises coupling means arranged for coupling with further coupling means of container means (121) of food products to allow correct insertion of said container means (121) in said containment compartments (11a, 15a).

44. Apparatus according to claim 43, wherein said coupling means comprises first coupling means of said heatable containment compartments (11a) arranged for coupling with further first coupling means of container means (121) of food products intended for being inserted in said heatable containment compartments (11a) and second coupling means of non-heatable containment compartments (15a) arranged for coupling with further second coupling means of container means of food products intended for being inserted in said non-heatable containment compartments (15a).

45. Apparatus according to any preceding claim, wherein said signalling means is connected to communication means, for example electronic, telephonic or e-mail communication means for sending signals to the appropriate recipients.

46. Apparatus according to any preceding claim, and further comprising further signalling means arranged for signalling the contents of each containment compartment (11a, 15a).

47. Apparatus according to claim 46, wherein said further signalling means is connected to further communication means for communicating with a remote control system.

48. Apparatus according to any preceding claim, further comprising microwave heating means for heating said food products.

## Patentansprüche

1. Vorrichtung für die Konservierung und Auffrischung von Nahrungsmittelprodukten, die umfasst:
eine Vielzahl von Einschlussfächern (11, 15), in die die Nahrungsmittelprodukte eingelegt werden,
- eine Kühleinrichtung (31, 32, 33, 34; 50, 51, 52), die zum Kühlen der Einschlussfächer (11, 15) zum Halten der Nahrungsmittelprodukte auf einer gewünschten Konservierungstemperatur geeignet ist,
- eine Heizeinrichtung (28, 29, 29a, 29b, 35, 36; 53), die zum Heizen der Einschlussfächer (11, 15) zum Erhitzen der Nahrungsmittelprodukte geeignet ist, wobei die Heizeinrichtung (28, 29, 29a, 29b, 35, 36; 53) und die Kühleinrichtung mit den Einschlussfächern (11, 15) verbunden sind, um einen gewünschten Bruchteil der Einschlussfächer (11, 15) unabhängig von den restlichen Einschlussfächern (11, 15) zu heizen oder zu kühlen, **dadurch gekennzeichnet, dass** sie ferner umfasst:
- eine Verriegelungs-/Entriegelungseinrichtung zum selektiven Verriegeln/Entriegeln mindestens eines Einschlussfachs (11a, 15a) der Vielzahl von Einschlussfächern (11, 15),
- eine Anzeigeeinrichtung (41, 41 a), die zum Angeben des Typs von Nahrungsmittelprodukten, die in jedem Einschlussfach (11a, 15a) der Vielzahl von Einschlussfächern (11, 15) enthalten sind, angeordnet ist, und
- eine Signalisierungseinrichtung, die zum Signalisieren des Öffnens jedes Einschlussfachs (11a, 15a) angeordnet ist.

2. Vorrichtung nach Anspruch 1, wobei der Bruchteil von heizbaren Einschlussfächern ein einzelnes Einschlussfach (11a) umfasst.

3. Vorrichtung nach Anspruch 1 oder 2, die ferner eine Vielzahl von Verschlusseinrichtungen (17) umfasst, die zum Schließen der Vielzahl von Einschlussfächern (11, 15) angeordnet sind.

4. Vorrichtung nach Anspruch 3, wobei jede der Verschlusseinrichtungen (17) eine Tür (17a) umfasst, die einem jeweiligen Einschlussfach (11, 15) zugeordnet ist und an einer vorderen Oberfläche (16) der Vorrichtung (1) durch eine Gelenkeinrichtung (27) gelenkig gelagert ist, die um eine Längsgelenkachse (Y) drehbar ist.

5. Vorrichtung nach Anspruch 3, wobei jede der Verschlusseinrichtungen (17) eine Tür (17a) umfasst, die einem jeweiligen Einschlussfach (11, 15) zugeordnet ist und an einer vorderen Oberfläche (16) der Vorrichtung (1) durch eine Gelenkeinrichtung (27) gelenkig gelagert ist, die um eine Quergelenkachse (X) drehbar ist.

6. Vorrichtung nach Anspruch 3, wobei jede der Verschlusseinrichtungen (17) eine Tür (17a) umfasst, die einem jeweiligen Einschlussfach (11, 15) zugeordnet ist und in Bezug auf eine vordere Oberfläche (16) der Vorrichtung (1) beweglich ist.

7. Vorrichtung nach einem der Ansprüche 3 bis 6, die ferner eine automatische Verschlusseinrichtung der Vielzahl von Verschlusseinrichtungen (17) umfasst, die zum automatischen Schließen jeder Tür (17a) der Vielzahl von Verschlusseinrichtungen (17) angeordnet ist.

8. Vorrichtung nach einem der Ansprüche 1 bis 7, wobei die Heizeinrichtung ein zentralisiertes Heizsystem (28, 29, 29a, 29b, 35, 36) umfasst.

9. Vorrichtung nach einem der Ansprüche 1 bis 7, wobei die Heizeinrichtung ein Konvektionsheizsystem (28, 29, 29a, 29b, 35, 36) umfasst.

10. Vorrichtung nach einem der Ansprüche 1 bis 7, wobei die Heizeinrichtung ein Kontaktheizsystem (53) umfasst.

11. Vorrichtung nach Anspruch 8 oder 9, wobei das zentralisierte Heizsystem oder das Konvektionsheizsystem ein elektrisches Heizelement (36), das zum Erzeugen von Wärme angeordnet ist, eine Gebläseeinrichtung (35), die zum Schieben der Wärme in Richtung einer Leitungseinrichtung (29, 29a, 29b) angeordnet ist, die die Wärme in Richtung der Vielzahl von heizbaren Einschlussfächern (11) befördert, umfasst.

12. Vorrichtung nach einem der Ansprüche 1 bis 11, wobei die Heizeinrichtung eine Vielzahl von Heizvorrichtungen (53) umfasst, die an der Vielzahl von heizbaren Einschlussfächern (11) angeordnet sind.

13. Vorrichtung nach Anspruch 12, wobei mindestens eine Heizvorrichtung (53) der Vielzahl von Heizvorrichtungen (53) an jedem heizbaren Einschlussfach (11a) der Vielzahl von heizbaren Einschlussfächern (11) angeordnet ist.

14. Vorrichtung nach einem vorangehenden Anspruch, die ferner eine Verbindungseinrichtung (30) umfasst, die zum Verbinden des gewünschten Bruchteils der heizbaren Einschlussfächer mit der Heizeinrichtung (28, 29, 29a, 29b, 35, 36; 53) zum Heizen des gewünschten Bruchteils der heizbaren Einschlussfächer angeordnet ist, wobei die Verbindungseinrichtung eine Schieberventileinrichtung (30) umfasst, die zwischen einer Heizposition, in der die Heizeinrichtung (28, 29, 29a, 29b, 35, 36; 53) mit dem gewünschten Bruchteil von Einschlussfächern verbunden ist, und einer Kühlposition, in der die Heizeinrichtung (28, 29, 29a, 29b, 35, 36; 53) nicht mit dem gewünschten Bruchteil von Einschlussfächern verbunden ist, beweglich ist.

15. Vorrichtung nach Anspruch 14, wobei in der Kühlposition die Kühleinrichtung (31, 32, 33, 34; 50, 51, 52) mit dem Bruchteil von Einschlussfächern verbunden ist.

16. Vorrichtung nach einem vorangehenden Anspruch, die ferner eine Antriebseinrichtung umfasst, die mit der Heizeinrichtung (28, 29, 29a, 29b, 35, 36; 53) verbunden ist und zum Antreiben der Heizeinrichtung (28, 29, 29a, 29b, 35, 36; 53) zum Heizen des gewünschten Bruchteils von heizbaren Einschlussfächern angeordnet ist.

17. Vorrichtung nach einem der Ansprüche 14 bis 16, die ferner eine Aktivierungseinrichtung umfasst, die mit der Verbindungseinrichtung (30) verbunden ist und zum Bewegen der Verbindungseinrichtung (30) angeordnet ist.

18. Vorrichtung nach Anspruch 17, wobei die Aktivierungseinrichtung eine elektrische Aktivierungseinrichtung umfasst.

19. Vorrichtung nach einem vorangehenden Anspruch, die ferner eine Auswahleinrichtung zum Auswählen des Bruchteils von zu heizenden heizbaren Einschlussfächern umfasst.

20. Vorrichtung nach Anspruch 19, wobei die Auswahleinrichtung mit der Antriebseinrichtung zum selektiven Antreiben der Antriebseinrichtung verbunden ist.

21. Vorrichtung nach einem vorangehenden Anspruch, die ferner eine Steuereinrichtung der Vorrichtung umfasst, die zum Steuern des Betriebs der Vorrichtung angeordnet ist.

22. Vorrichtung nach Anspruch 21, wobei die Steuereinrichtung mit der Auswahleinrichtung zum Aktivieren der Auswahlsteuerung verbunden ist.

23. Vorrichtung nach Anspruch 21 oder 22, wobei die Steuereinrichtung eine vorgegebene Fernsteuereinrichtung umfasst, die zum Fernsteuern des Betriebs der Vorrichtung angeordnet ist.

24. Vorrichtung nach Anspruch 21 oder 22, wobei die Steuereinrichtung eine lokale Steuereinrichtung (42) umfasst, die an der Vorrichtung (1) positioniert ist und zum Steuern des Betriebs der Vorrichtung angeordnet ist.

25. Vorrichtung nach Anspruch 24, wobei die lokale Steuereinrichtung eine Drucktasteneinrichtung (42) umfasst, die durch einen Benutzer zum Steuern des Betriebs der Vorrichtung betätigt werden kann.

26. Vorrichtung nach Anspruch 25, wobei die Drucktasteneinrichtung (42) ein Drucktastenfeld zum Steuern des Betriebs der Vorrichtung umfasst.

27. Vorrichtung nach Anspruch 25, wobei die Drucktasteneinrichtung eine Vielzahl von Drucktasten (42) umfasst, die an jedem Einschlussfach (11a, 15a) der Vielzahl von Einschlussfächern (11, 15) positioniert sind.

28. Vorrichtung nach einem vorangehenden Anspruch, wobei die Anzeigeeinrichtung (41, 41 a) eine Vielzahl von Anzeigeeinrichtungen (41 a) umfasst, die an jedem Einschlussfach (11a, 15a) der Vielzahl von Einschlussfächern (11, 15) angeordnet sind.

29. Vorrichtung nach einem vorangehenden Anspruch, wobei die Kühleinrichtung ein zentralisiertes Kühlsystem (31, 32, 33, 34) umfasst.

30. Vorrichtung nach Anspruch 29, wobei das zentralisierte Kühlsystem ein Kühlsystem (32) umfasst, das zum Kühlen eines Kühlfluids angeordnet ist.

31. Vorrichtung nach Anspruch 30, die ferner Kühlleitungen (31) umfasst, die sich vom Kühlsystem (32) in Richtung von jedem Einschlussfach (11a, 15a) der Vielzahl von Einschlussfächern (11, 15) erstrecken und zum Befördern eines Kühlfluids in Richtung jedes Einschlussfachs (11a, 15a) angeordnet sind.

32. Vorrichtung nach Anspruch 31, wobei die Kühlleitungen (31) ferner erste Kühlleitungseinrichtungen, die sich zwischen dem Kühlsystem und heizbaren Fächern (11a) der Vielzahl von Einschlussfächern (11, 15) erstrecken, und zweite Kühlleitungseinrichtungen, die sich zwischen dem Kühlsystem und nicht heizbaren Fächern (15a) der Vielzahl von Einschlussfächern (11, 15) erstrecken, umfassen.

33. Vorrichtung nach Anspruch 32, die ferner Schalteinrichtungen umfasst, die an den Kühlleitungen (31) angeordnet sind und zum Öffnen/Schließen der Kühlleitungen (31) zum Ermöglichen/Verhindern einer Kühlung von entsprechenden Einschlussfächern (11a, 15a) angeordnet sind.

34. Vorrichtung nach einem vorangehenden Anspruch, wobei die Kühleinrichtung eine Vielzahl von lokalen Kühleinrichtungen (50, 51, 52) umfasst, die an jedem Einschlussfach (11a, 15a) der Vielzahl von Heizfächern (11, 15) angeordnet sind.

35. Vorrichtung nach Anspruch 34, wobei die lokale Kühleinrichtung (50, 51, 52) eine Vielzahl von Platten (50) umfasst, die an jedem Einschlussfach (11a, 15a) der Vielzahl von Heizfächern (11, 15) angeordnet sind.

36. Vorrichtung nach Anspruch 35, wobei die Vielzahl von Platten Platten (50) umfasst, die aus einem Leitermaterial, vorzugsweise einem Metall wie beispielsweise Aluminium, bestehen.

37. Vorrichtung nach Anspruch 35 oder 36, wobei die Kühleinrichtung mindestens einen Verdampfer (52) umfasst.

38. Vorrichtung nach Anspruch 37, wobei ein Verdampfer (52) an jeder Platte (50) vorhanden ist.

39. Vorrichtung nach einem vorangehenden Anspruch, die ferner eine Kühlfacheinrichtung (3) umfasst, die von der Vielzahl von Einschlussfächern (11, 15) getrennt ist, mit einer weiteren Kühleinrichtung versehen ist und zum Konservieren von weiteren Nahrungsmittelprodukten angeordnet ist.

40. Vorrichtung nach einem vorangehenden Anspruch, die ferner eine weitere Facheinrichtung (4) umfasst, die von der Vielzahl von Einschlussfächern (11, 15) getrennt ist, mit noch einer weiteren Kühleinrichtung versehen ist und zur Konservierung von Nahrungsmittelabfall angeordnet ist.

41. Vorrichtung nach einem vorangehenden Anspruch, die ferner eine Lautsprechereinrichtung (60) umfasst, die zum Führen eines Benutzers bei der Verwendung der Vorrichtung angeordnet ist.

42. Vorrichtung nach einem vorangehenden Anspruch, die ferner eine bewegliche Schubladeneinrichtung umfasst, die so geformt ist, dass sie in jedes Einschlussfach (11a, 15a) eingeschoben wird, und zum Aufnehmen der Nahrungsmittelprodukte angeordnet ist.

43. Vorrichtung nach einem vorangehenden Anspruch, wobei jedes Einschlussfach (11a, 15a) eine Kopplungseinrichtung umfasst, die zum Koppeln mit einer weiteren Kopplungseinrichtung einer Behältereinrichtung (121) für Nahrungsmittelprodukte angeordnet ist, um das korrekte Einsetzen der Behältereinrichtung (121) in die Einschlussfächer (11a, 15a) zu ermöglichen.

44. Vorrichtung nach Anspruch 43, wobei die Kopplungseinrichtung eine erste Kopplungseinrichtung der heizbaren Einschlussfächer (11a), die zum Koppeln mit der weiteren ersten Kopplungseinrichtung der Behältereinrichtung (121) von Nahrungsmittelprodukten angeordnet ist, die zum Einsetzen in die heizbaren Einschlussfächer (11a) bestimmt ist, und eine zweite Kopplungseinrichtung für nicht heizbare Einschlussfächer (15a), die zum Koppeln mit einer weiteren zweiten Kopplungseinrichtung einer Behältereinrichtung für Nahrungsmittelprodukte angeordnet ist, die zum Einsetzen in die nicht heizbaren Einschlussfächer (15a) bestimmt ist, umfasst.

45. Vorrichtung nach einem vorangehenden Anspruch, wobei die Signalisierungseinrichtung mit einer Kommunikationseinrichtung, beispielsweise einer elektronischen, Telefon- oder E-Mail-Kommunikationseinrichtung zum Senden von Signalen zu den geeigneten Empfängern verbunden ist.

46. Vorrichtung nach einem vorangehenden Anspruch, die ferner eine weitere Signalisierungseinrichtung umfasst, die zum Signalisieren der Inhalte jedes Einschlussfachs (11a, 15a) angeordnet ist.

47. Vorrichtung nach Anspruch 46, wobei die weitere Signalisierungseinrichtung mit einer weiteren Kommunikationseinrichtung zum Kommunizieren mit einem Fernsteuersystem verbunden ist.

48. Vorrichtung nach einem vorangehenden Anspruch, die ferner ein Mikrowellenheizmittel zum Erhitzen der Nahrungsmittelprodukte umfasst.

## Revendications

1. Dispositif de conservation et de remise en température de produits alimentaires, comprenant :
- une pluralité de compartiments de stockage (11, 15) à l'intérieur desquels sont insérés lesdits produits alimentaires,
- des moyens de réfrigération (31, 32, 33, 34 ; 50, 51, 52) aptes à réfrigérer lesdits compartiments de stockage (11, 15) afin de maintenir lesdits produits alimentaires à une température de conservation désirée,
- des moyens de chauffage (28, 29, 29a, 29b, 35, 36 ; 53) aptes à chauffer lesdits compartiments de stockage (11, 15) afin de chauffer lesdits produits alimentaires, lesdits moyens de chauffage (28, 29, 29a, 29b, 35, 36 ; 53) et lesdits moyens de réfrigération étant reliés auxdits compartiments de stockage (11, 15) afin de chauffer ou de réfrigérer une fraction désirée des compartiments de stockage (11, 15) indépendamment des compartiments de stockage (11, 15) restants,
*caractérisé en ce qu*'il comprend en outre :
- des moyens de verrouillage/déverrouillage pour verrouiller/déverrouiller sélectivement au moins un compartiment de stockage (11a, 15a) de ladite pluralité de compartiments de stockage (11, 15),
- des moyens de visualisation (41, 41a) prévus pour indiquer le type de produits alimentaires contenus dans chaque compartiment de stockage (11a, 15a) de ladite pluralité de compartiments de stockage (11, 15), et
- des moyens de signalisation prévus pour signaler l'ouverture de chacun des compartiments de stockage (11a, 15a).

2. Dispositif selon la revendication 1, dans lequel ladite fraction de compartiments de stockage pouvant être chauffés comprend un unique compartiment de stockage (11a).

3. Dispositif selon la revendication 1 ou 2, et comprenant en outre une pluralité de moyens de fermeture (17) prévus pour fermer ladite pluralité de compartiments de stockage (11, 15).

4. Dispositif selon la revendication 3, dans lequel chacun desdits moyens de fermeture (17) comprend une porte (17a) associée à un compartiment de stockage respectif (11, 15) et articulée sur une surface avant (16) dudit dispositif (1) par des moyens de charnières (27) qui sont rotatifs autour d'un axe d'articulation longitudinal (Y).

5. Dispositif selon la revendication 3, dans lequel chacun desdits moyens de fermeture (17) comprend une porte (17a) associée à un compartiment de stockage respectif (11, 15) et articulée sur une surface avant (16) dudit dispositif (1) par des moyens de charnières (27) qui sont rotatifs autour d'un axe d'articulation transversal (X).

6. Dispositif selon la revendication 3, dans lequel chacun desdits moyens de fermeture (17) comprend une porte (17a) associée à un compartiment de stockage respectif (11, 15) et mobile par rapport à une surface avant (16) dudit dispositif (1).

7. Dispositif selon l'une quelconque des revendications 3 à 6, et comprenant en outre des moyens de fermeture automatique de ladite pluralité de moyens de fermeture (17) et prévus pour fermer automatiquement chaque porte (17a) de ladite pluralité de moyens de fermeture (17).

8. Dispositif selon l'une quelconque des revendications 1 à 7, dans lequel lesdits moyens de chauffage comprennent un système de chauffage centralisé (28, 29, 29a, 29b, 35, 36).

9. Dispositif selon l'une quelconque des revendications 1 à 7, dans lequel lesdits moyens de chauffage comprennent un système de chauffage par convection (28, 29, 29a, 29b, 35, 36).

10. Dispositif selon l'une quelconque des revendications 1 à 7, dans lequel lesdits moyens de chauffage comprennent un système de chauffage par contact (53).

11. Dispositif selon la revendication 8 ou 9, dans lequel ledit système de chauffage centralisé ou ledit système de chauffage par convection comprend un élément chauffant électrique (36) prévu pour générer de la chaleur, des moyens de ventilateur (35) prévus pour pousser ladite chaleur vers des moyens de conduit (29, 29a, 29b) qui acheminent ladite chaleur vers ladite pluralité de compartiments de stockage chauffables (11).

12. Dispositif selon l'une quelconque des revendications 1 à 11, dans lequel lesdits moyens de chauffage comprennent une pluralité de dispositifs de chauffage (53) positionnés au niveau de ladite pluralité de compartiments de stockage chauffables (11).

13. Dispositif selon la revendication 12, dans lequel au moins un dispositif de chauffage (53) de ladite pluralité de dispositifs de chauffage (53) est positionné au niveau de chaque compartiment de stockage chauffable (11a) de ladite pluralité de compartiments de stockage chauffables (11).

14. Dispositif selon l'une quelconque des revendications précédentes, comprenant en outre des moyens de connexion (30) prévus pour raccorder ladite fraction désirée de compartiments de stockage chauffables auxdits moyens de chauffage (28, 29, 29a, 29b, 35, 36 ; 53) afin de chauffer ladite fraction désirée de compartiments de stockage chauffables, lesdits moyens de connexion comprenant des moyens de vanne (30) mobiles entre une position de chauffage, dans laquelle lesdits moyens de chauffage (28, 29, 29a, 29b, 35, 36 ; 53) sont raccordés à ladite fraction désirée de compartiments de stockage, et une position de réfrigération, dans laquelle lesdits moyens de chauffage (28, 29, 29a, 29b, 35, 36 ; 53) ne sont pas raccordés à ladite fraction désirée de compartiments de stockage.

15. Dispositif selon la revendication 14, dans lequel, dans ladite position de réfrigération, lesdits moyens de réfrigération (31, 32, 33, 34 ; 50, 51, 52) sont raccordés à ladite fraction de compartiments de stockage.

16. Dispositif selon l'une quelconque des revendications précédentes, et comprenant en outre des moyens d'entraînement raccordés auxdits moyens de chauffage (28, 29, 29a, 29b, 35, 36 ; 53) et prévus pour actionner lesdits moyens de chauffage (28, 29, 29a, 29b, 35, 36 ; 53) pour chauffer ladite fraction désirée de compartiments de stockage chauffables.

17. Dispositif selon l'une quelconque des revendications 14 à 16, et comprenant en outre des moyens d'activation raccordés auxdits moyens de connexion (30) et prévus pour déplacer lesdits moyens de connexion (30).

18. Dispositif selon la revendication 17, dans lequel lesdits moyens d'activation comprennent des moyens d'activation électriques.

19. Dispositif selon l'une quelconque des revendications précédentes, et comprenant en outre des moyens de sélection pour sélectionner ladite fraction de compartiments de stockage chauffables devant être chauffés.

20. Dispositif selon la revendication 19, dans lequel lesdits moyens de sélection sont raccordés auxdits moyens d'actionnement pour actionner sélectivement lesdits moyens d'actionnement.

21. Dispositif selon l'une quelconque des revendications précédentes, et comprenant en outre des moyens de commande dudit dispositif prévus pour commander le fonctionnement dudit dispositif.

22. Dispositif selon la revendication 21, dans lequel lesdits moyens de commande sont raccordés auxdits moyens de sélection pour activer la commande de la sélection.

23. Dispositif selon la revendication 21 ou 22, dans lequel lesdits moyens de commande comprennent des moyens de commande à distance préréglés prévus pour commander à distance le fonctionnement dudit dispositif.

24. Dispositif selon la revendication 21 ou 22, dans lequel lesdits moyens de commande comprennent des moyens de commande locaux (42) positionnés sur ledit dispositif (1) et prévus pour commander le fonctionnement dudit dispositif.

25. Dispositif selon la revendication 24, dans lequel lesdits moyens de commande locaux comprennent des moyens de bouton-poussoir (42) qui peuvent être actionnés par un utilisateur pour commander le fonctionnement dudit dispositif.

26. Dispositif selon la revendication 25, dans lequel lesdits moyens de bouton-poussoir (42) comprennent un tableau de commande pour commander le fonctionnement dudit dispositif.

27. Dispositif selon la revendication 25, dans lequel lesdits moyens de bouton-poussoir comprennent une pluralité de boutons-poussoirs (42) positionnés sur chaque compartiment de stockage (11a, 15a) de ladite pluralité de compartiments de stockage (11, 15).

28. Dispositif selon l'une quelconque des revendications précédentes, dans lequel lesdits moyens de visualisation (41, 41a) comprennent une pluralité de moyens de visualisation (41a) placés au niveau de chaque compartiment de stockage (11a, 15a) de ladite pluralité de compartiments de stockage (11, 15).

29. Dispositif selon l'une quelconque des revendications précédentes, dans lequel lesdits moyens de réfrigération comprennent un système de réfrigération centralisé (31, 32, 33, 34).

30. Dispositif selon la revendication 29, dans lequel ledit système de réfrigération centralisé comprend un système de réfrigération (32) prévu pour refroidir un fluide réfrigérant.

31. Dispositif selon la revendication 30, et comprenant en outre des conduits de refroidissement (31) qui partent dudit système de réfrigération (32) vers chaque compartiment de stockage (11a, 15a) de ladite pluralité de compartiments de stockage (11, 15) et agencés pour acheminer un fluide réfrigérant vers chaque compartiment de stockage (11a, 15a).

32. Dispositif selon la revendication 31, dans lequel lesdits conduits de refroidissement (31) comprennent en outre des premiers moyens de conduit de réfrigération s'étendant entre ledit système de réfrigération et des compartiments chauffables (11a) de ladite pluralité de compartiments de stockage (11, 15) et des deuxièmes moyens de conduit de réfrigération s'étendant entre ledit système de réfrigération et des compartiments non chauffables (15a) de ladite pluralité de compartiments de stockage (11, 15).

33. Dispositif selon la revendication 32, et comprenant en outre moyens de commutateur, positionnés au niveau desdits conduits de refroidissement (31) et prévus pour ouvrir/fermer lesdits conduits de refroidissement (31) afin de permettre/d'empêcher le refroidissement de compartiments de stockage correspondants (11a, 15a).

34. Dispositif selon l'une quelconque des revendications précédentes, dans lequel lesdits moyens de réfrigération comprennent une pluralité de moyens de réfrigération locaux (50, 51, 52) positionnés au niveau de chaque compartiment de stockage (11a, 15a) de ladite pluralité de compartiments chauffants (11, 15).

35. Dispositif selon la revendication 34, dans lequel lesdits moyens de réfrigération locaux (50, 51, 52) comprennent une pluralité de plaques (50) positionnées au niveau de chacun des compartiments de stockage (11a, 15a) de ladite pluralité de compartiments chauffants (11, 15).

36. Dispositif selon la revendication 35, dans lequel ladite pluralité de plaques comprend des plaques (50) faites d'un matériau conducteur, de manière préférée un métal, comme par exemple l'aluminium.

37. Dispositif selon la revendication 35 ou 36, dans lequel lesdits moyens de réfrigération comprennent au moins un évaporateur (52).

38. Dispositif selon la revendication 37, dans lequel un évaporateur (32) est présent au niveau de chaque plaque (50).

39. Dispositif selon l'une quelconque des revendications précédentes, et comprenant en outre des moyens de compartiments de réfrigération (3) séparés de ladite pluralité de compartiments de stockage (11, 15), pourvus de moyens de réfrigération supplémentaires et prévus pour conserver des produits alimentaires supplémentaires.

40. Dispositif selon l'une quelconque des revendications précédentes, et comprenant en outre des moyens de compartiments supplémentaires (4) séparés de ladite pluralité de compartiments de stockage (11, 15), pourvus d'encore d'autres moyens de réfrigération et prévus pour la conservation de déchets alimentaires.

41. Dispositif selon l'une quelconque des revendications précédentes, et comprenant en outre des moyens de haut-parleur (60) prévus pour guider un utilisateur lors de l'utilisation dudit dispositif.

42. Dispositif selon l'une quelconque des revendications précédentes, et comprenant en outre des moyens de tiroirs mobiles conformés de manière à être insérés dans chaque compartiment de stockage (11a, 15a) et prévus pour recevoir lesdits produits alimentaires.

43. Dispositif selon l'une quelconque des revendications précédentes, dans lequel chaque compartiment de stockage (11a, 15a) comprend des moyens d'accouplement prévus pour s'accoupler avec d'autres moyens d'accouplement de moyens de contenant (121) de produits alimentaires pour permettre une insertion correcte desdits moyens de contenant (121) dans lesdits compartiments de stockage (11a, 15a).

44. Dispositif selon la revendication 43, dans lequel lesdits moyens d'accouplement comprennent des premiers moyens d'accouplement desdits compartiments de stockage chauffables (11a) prévus pour s'accoupler avec d'autres premiers moyens d'accouplement de moyens de contenant (121) de produits alimentaires destinés à être insérés dans lesdits compartiments de stockage chauffables (11a) et des deuxièmes moyens d'accouplement de compartiments de stockage non chauffables (15a) prévus pour s'accoupler avec d'autres deuxièmes moyens d'accouplement de moyens de contenant de produits alimentaires destinés à être insérés dans lesdits compartiments de stockage non chauffables (15a).

45. Dispositif selon l'une quelconque des revendications précédentes, dans lequel lesdits moyens de signalisation sont raccordés à des moyens de communication, par exemple de communications électroniques, téléphoniques ou par courriel, destinés à envoyer des signaux aux destinataires appropriés.

46. Dispositif selon l'une quelconque des revendications précédentes, et comprenant en outre des moyens de signalisation supplémentaires prévus pour signaler les contenus de chaque compartiment de stockage (11a, 15a).

47. Dispositif selon la revendication 46, dans lequel lesdits moyens de signalisation supplémentaires sont raccordés à des moyens de communication supplémentaires pour communiquer avec un système de télécommande.

48. Dispositif selon l'une quelconque des revendications précédentes, comprenant en outre des moyens de chauffage par microondes pour chauffer lesdits produits alimentaires.
